Europäisches Patentamt

European Patent Office

Office européen des brevets

(19)

(11) Veröffentlichungsnummer: **0 234 267**
**B1**

(12) **EUROPÄISCHE PATENTSCHRIFT**

(45) Veröffentlichungstag der Patentschrift: **09.05.90**

(51) Int. Cl.⁵: **F 16 H 61/16**

(21) Anmeldenummer: **87100756.3**

(22) Anmeldetag: **21.01.87**

(54) Schaltsperre für den Rückwärtsgang eines mehrgängigen Wechselgetriebes.

(30) Priorität: **23.01.86 DE 3601954**

(43) Veröffentlichungstag der Anmeldung:
**02.09.87 Patentblatt 87/36**

(45) Bekanntmachung des Hinweises auf die Patenterteilung:
**09.05.90 Patentblatt 90/19**

(84) Benannte Vertragsstaaten:
**DE ES FR GB IT SE**

(56) Entgegenhaltungen:
**DE-A-2 949 354
DE-C- 874 253
FR-A-2 169 625
FR-A-2 256 465
GB-A-2 097 493
US-A-4 018 099**

(73) Patentinhaber: **FORD-WERKE AKTIENGESELLSCHAFT
Werk Köln-Niehl Henry-Ford-Strasse Postfach 60 40 02
D-5000 Köln 60 (DE)**
(84) **DE IT SE**
(73) Patentinhaber: **FORD MOTOR COMPANY LIMITED
Eagle Way
Brentwood Essex CM13 3BW (GB)**
(84) **GB**
(73) Patentinhaber: **FORD FRANCE SOCIETE ANONYME
344 Avenue Napoléon Bonaparte B.P. 307
F-92506 Rueil Malmaison Cedex (FR)**
(84) **FR**
(73) Patentinhaber: **Ford Motor Company
The American Road
Dearborn, MI 48121 (US)**
(84) **ES**

(72) Erfinder: **Sabel, Gustav
Pescher Pfad 5
D-5000 Köln 71 (DE)**

(74) Vertreter: **Ritzkowsky, Harald, Dipl.-Ing.
Ford-Werke Aktiengesellschaft Patentabteilung
Z/DRR-2 Henry-Ford-Strasse
D-5000 Köln-Niehl (DE)**

Beschreibung

Die Erfindung bezieht sich auf eine Schaltsperre für den Rückwärtsgang eines mehrgängigen Wechselgetriebes insbesondere für Kraftfahrzeuge, der im Oberbegriff des Patentanspruches 1 erläuterten Art.

Aus der DE—A—29 49 354 ist eine Schaltsperre für den Rückwärtsgang eines mehrgängigen Wechselgetriebes der im Oberbegriff des Patentanspruches 1 erläuterten Art bekannt.

Bei dieser bekannten Schaltsperre mit einer über einen Schalthebel zur Vorwahl von Schaltgassen verdrehbaren und zum Einlegen von Gängen axial verschiebbaren Schaltwelle, die einen Schaltfinger trägt, der auf entsprechende Schaltgabeln im Wechselgetriebe einwirkt, wobei ein weiterer Schaltfinger auf der Schaltwelle und ein mit Teilen der Schaltwelle zusammenwirkender federbelasteter, drehbarer Sperrnocken vorgesehen sind und der Sperrnocken eine Rückschaltung aus einem Vorwärtsgang in den in der gleichen Schaltgasse gegenüberliegenden Rückwärtsgang verhindert, indem eine sektorförmige Grundplatte um einen Bolzen drehbar angeordnet ist und einen unteren Sektorausschnitt aufweist, in dem eine mit ihrer Windung den Bolzen umfassende, mit Schenkeln versehene Feder angeordnet ist, deren Schenkel die Grundplatte in einer Neutrallage halten.

Diese bekannte Schaltsperre weist den Nachteil auf, daß die um den Bolzen drehbar angeordnete, sektorförmige Grundplatte bei einer Rückschaltung vom 5. Gang ein unerwünschtes Einschalten des Rückwärtsganges verhindert, in dem eine solche Schaltbewegung durch das Aufeinandertreffen eines Ansatzes an einem Schaltstück mit dem einen Schenkel der Grundplatte und eine Abstützung der Grundplatte am Gehäuse verhindert wird.

Eine Fehlschaltung wird somit verhindert, der Fahrer des Fahrzeuges muß jedoch von sich aus die Schaltbewegung in die benachbarte Schaltgasse für den 3 und 4 Gang führen.

Die Aufgabe der Erfindung ist es, eine Schaltsperre für den Rückwärtsgang eines mehrgängigen Wechselgetriebes, der im Oberbegriff des Patentanspruches 1 erläuterten Art derart zu verbessern, daß bei beibehaltenem geringem Bau- und Montageaufwand eine zuverlässige Schaltsperrfunktion sichergestellt wird, die jedoch nicht in Form einer störenden Blockierung sondern in Form einer die Schaltbewegung unterstützenden Umlenkung vorgesehen wird.

Gemäß der Erfindung wird diese Aufgabe gelöst, indem eine Schaltsperre gemäß dem Oberbegriff des Patentanspruches 1 die im Kennzeichenteil des Patentanspruches 1 aufgezeigten Merkmale aufweist.

Dadurch, daß der Schaltfinger mit einer inneren Schaltkulisse führend zusammenwirkt, daß die Grundplatte über den Bolzen an der inneren Schaltkulisse drehbar angeordnet ist, daß die Grundplatte durch die Schenkel der Feder über einen in den Sektorausschnitt einragenden Stift und einen aus der Schaltkulisse herausragenden Stift gehalten ist, sowie daß die Grundplatte oben einstückig den Sperrnocken mit einer Fangwölbung aufweist, der mit dem weiteren Schaltfinger zusammenwirkt und damit ein Ausweichen durch Verschwenken der Schaltfinger in Richtung der benachbarten Schaltgasse erfordert, wird eine sehr genaue Umlenkung einer Rückschaltbewegung aus dem 5. Gang in die benachbarte Schaltgasse bewirkt, ohne daß die vorhandene Schaltsperre für eine unerwünschte Einschaltung des Rückwärtsganges störend in Erscheinung tritt.

Die um den Bolzen drehbar angeordnete Grundplatte kann in vorteilhafter Weise als Sinterteil ausgebildet sein und die innere Schaltkulisse kann durch Feinstanzen hergestellt sein, wobei der zur Begrenzung der Schenkel der Schenkelfeder erforderliche hochragende Stift durch Prägen ausgebildet werden kann.

Die Erfindung wird anhand eines in der beiliegenden Zeichnung gezeigten Ausführungsbeispieles näher erläutert. Es zeigt:

Fig. 1 eine Draufsicht auf eine innere Schaltkulisse mit der erfindungsgemäßen Schaltsperre mit in Strich-Punkt-Linien angedeutetem Schaltschema für den weiteren Schaltstift;

Fig. 2 einen vertikalen Schnitt entlang der Linie II—II in Fig. 1 und

Fig. 3 eine Ansicht der Grundplatte in Richtung des Pfeiles III in Fig. 2.

Die Erfindung geht aus von einer Schaltungsanordnung, bei der auf einer Schaltwelle (nicht gezeigt) ein weiterer Schaltfinger 1 angeordnet ist, der mit einer inneren Schaltkulisse 2 führend zusammenwirkt, um Schaltbewegungen in den Schaltgassen zwischen dem 1. und 2. Gang, dem 3. und 4. Gang und dem 5. Gang und dem Rückwärtsgang genauer zu kontrollieren.

Die innere Schaltkulisse 2 kann hierbei in geeigneter Weise im Getriebgehäuse festgelegt werden.

Gemäß der Erfindung bildet ein verlängerter Teil der inneren Schaltkulisse 2 eine Aufnahmefläche für eine Schaltsperre 3, die mit einem weiteren Schaltfinger 4 zusammenwirkt.

Die Schaltsperre besteht hierbei insgesamt nur aus vier Teilen, einer sektorförmigen Grundplatte 5, einem Bolzen 6 mit einem Sicherungsring 7 und aus einer Schenkelfeder 8.

Der Bolzen 6 ist an der inneren Schaltkulisse 2 in geeigneter Weise. z.B. durch Schweißen, befestigt.

Die Grundplatte 5 weist an ihrer Unterseite einen Sektorausschnitt 9 auf, in den hinein sich ein Hülsenansatz 10 und ein Stift 11 von der Grundplatte 5 her erstreckt. An der inneren Schaltkulisse 2 ist ein weiterer Stift 12 angeordnet, der sich von der inneren Schaltkulisse 2 her in den Sektorausschnitt 9 erstreckt und auf einem Radius mit dem Stift 11 liegt.

Die Schenkelfeder 8 liegt mit ihrer Windung um den Hülsenansatz 10 und umfaßt die beiden Stifte 11 und 12 mit ihren beiden Schenkeln.

Die Grundplatte 5 wird über die Schenkelfeder 8 in Verbindung mit den beiden Stiften 11 und 12 in einer Neutrallage gehalten und kann entgegen der Federkraft aus der Neutrallage nach beiden Seiten soweit verschwenkt werden, bis der jeweilige Schenkel der Schenkelfeder 8 an der entsprechenden Wandung des Sektorausschnittes 9 zur Anlage kommt. Somit sind die für eine Schaltsperre erforderlichen Anschläge unmittelbar in der schwenkbaren Grundplatte integriert.

Die Grundplatte 5 weist an ihrer Oberseite einstückig einen Fangnocken 13 mit einer Fangwölbung 14 auf, der bzw. die unmittelbar mit dem weiteren Schaltfinger 4 zusammenwirken.

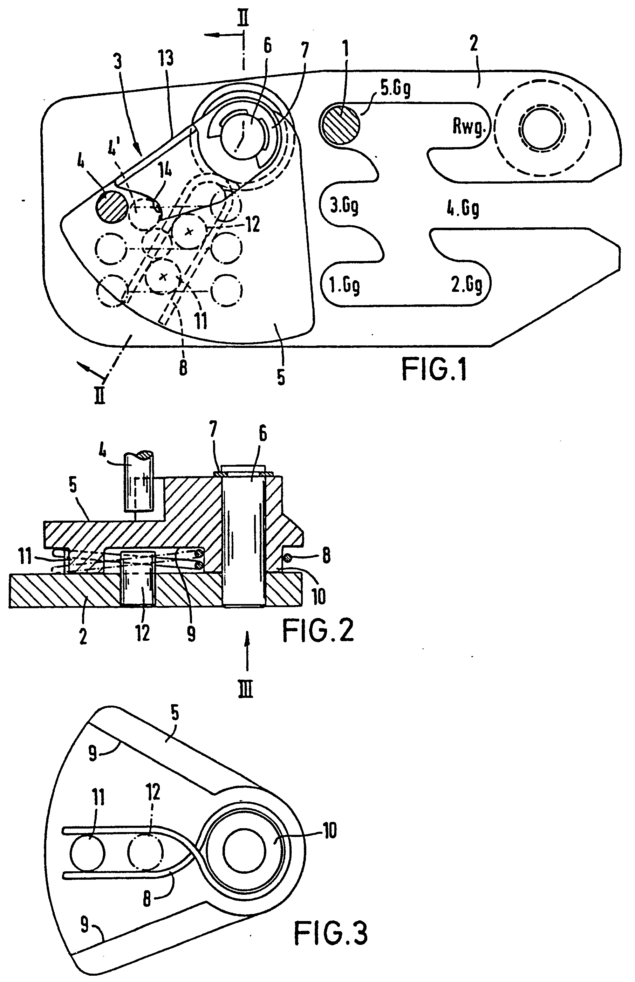

Wie aus Fig. 1 leicht zu ersehen ist, trifft der weitere Schaltfinger 4 bei einer Rückschaltung aus dem 5. Vorwärtsgang auf den Fangnocken 13 und tritt in dessen Fangwölbung 14 ein. Dadurch ist ein geradliniges Durchschalten in den in der gleichen Schaltgasse liegenden Rückwärtsgang nicht möglich und der weitere Schaltfinger 4 wird, wie in gestrichelten Linien bei 4' angedeutet, in die benachbarte Schaltgasse des 3. und 4. Ganges gedrängt, wobei dies in Form eines genauen Verschwenkens um den Bolzen 6 der Sperrvorrichtung 3 erfolgt.

Befindet sich der weitere Schaltstift 4 in den Schaltgassen des 1. und 2. Ganges oder des 3. und 4. Ganges, so wird durch eine Vorwählbewegung in die Schaltgasse des 5. Gang und des Rückwärtsganges ein unmittelbares Einrücken des Rückwärtsganges ermöglicht, da der Fangnocken 13 entgegen der Federwirkung wegschwenken kann. Wird jedoch nachfolgend einer Vorwahl der Schaltgasse für den 5. Gang und den Rückwärtsgang der 5. Gang eingerückt, so bewegt sich der entgegen der Federkraft weggeschwenkte Fangnocken 13 wieder in seine in vollen Linien gezeichnete neutrale Lage und verhindert in der bereits erwähnten Weise eine unmittelbare Rückschaltung vom 5. Gang in den Rückwärtsgang.

**Patentansprüche**

1. Schaltsperre für den Rückwärtsgang eines mehrgängigen Wechselgetriebes, insbesondere für Kraftfahrzeuge, mit einer über einen Schalthebel zur Vorwahl von Schaltgassen verdrehbaren und zum Einlegen von Gängen axial verschiebbaren Schaltwelle, die einen Schaltfinger (1) trägt, der auf entsprechende Schaltgabeln im Wechselgetriebe einwirkt, wobei ein weiterer Schaltfinger (4) auf der Schaltwelle und ein mit Teilen der Schaltwelle zusammenwirkender federbelasteter, drehbarer Sperrnocken (13) vorgesehen sind und der Sperrnocken (13) eine Rückschaltung aus einem Vorwärtsgang in den in der gleichen Schaltgasse gegenüberliegenden Rückwärtsgang verhindert, und daß eine sektorförmige Grundplatte (5) um einen Bolzen (6) drehbar angeordnet ist und einen unteren Sektorausschnitt aufweist, in dem eine mit ihrer Windung den Bolzen (6) umfassende, mit Schenkeln versehene Feder (8) angeordnet ist, deren Schenkel die Grundplatte (5) in einer Neutrallage halten dadurch gekennzeichnet daß der Schaltfinger (1) mit einer inneren Schaltkulisse (2) führend zusammenwirkt, daß die Grundplatte (5) über den Bolzen (6) an der inneren Schaltkulisse (2) drehbar angeordnet ist, daß die Grundplatte (5) durch die Schenkel der Feder (8) über einen in den Sektorausschnitt (9) einragenden Stift (11) und einen aus der Schaltkulisse herausragenden Stift (12) gehalten ist, sowie das die Grundplatte (5) oben einstückig den Sperrnocken (13) mit einer Fangwölbung (14) aufweist, der mit dem weiteren Schaltfinger (4) zusammenwirkt, und damit ein Ausweichen durch Verschwenken der Schaltfinger (1, 4) in Richtung der benachbarten Schaltgasse erfordert.

2. Schaltsperre nach Anspruch 1, dadurch gekennzeichnet, daß die Grundplatte (5) als Sinterteil ausgebildet ist.

3. Schaltsperre nach den Ansprüchen 1 und 2, dadurch gekennzeichnet, daß die innere Schaltkulisse (2) durch Feinstanzen hergestellt ist und der hochragende Stift (12) durch Prägen gebildet ist.

**Revendications**

1. Dispositif de verrouillage de manoeuvre pour la marche arrière d'un changement de vitesse à plusieurs vitesses, en particulier pour véhicules automobiles, comportant un arbre de manoeuvre pouvant tourner, par l'intermédiaire d'un levier de manoeuvre pour sélectionner les pistes de manoeuvre et déplaçable axialement pour enclencher les vitesses, lequel arbre comporte un doigt de manoeuvre (1) qui agit sur des fourches de manoeuvre correspondantes dans le changement de vitesse, un autre doigt de manoeuvre (4) étant prévu sur l'arbre de manoeuvre et une came de verrouillage (13) soumise à l'action d'un ressort, tournante, coopérant avec des parties de l'arbre de manoeuvre, étant prévue et la came de verrouillage (13) empêchant une manoeuvre en retour d'une marche avant à la marche arrière opposée située dans la même piste de manoeuvre, et une plaque de base (5) en forme de secteurs est montée tournante autour d'un axe (6) et comporte une découpe de secteur inférieure dans laquelle est placé un ressort (8) entourant l'axe (6) de ses spires et pourvu de branches qui maintiennent la plaque de base 5 dans une position neutre, caractérisé en ce que le doigt de manoeuvre (1) coopère en guidage avec une coulisse de manoeuvre (2) intérieure, en ce que la plaque de base (5) est montée tournante sur la coulisse intérieure (2) par l'intermédiaire de l'axe (6), en ce que la plaque de base (5) est maintenue par les branches du ressort (8), par l'intermédiaire d'une goupille (11) pénétrant dans la découpe de secteur (9) et d'une goupille (12) ressortant de la coulisse, et en ce que la plaque de base (5) comporte à sa partie supérieure et d'une seule pièce la came de verrouillage (13) avec une courbure de saisie (14) qui coopère avec l'autre doigt de manoeuvre (4) et entraîne ainsi une déviation par pivotement des doigts de manoeuvre (1, 4) en direction de la piste de manoeuvre voisine.

2. Dispositif de verrouillage de manoeuvre selon la revendication 1 caractérisé en ce que la plaque de base (5) est une pièce frittée.

3. Dispositif de verrouillage de manoeuvre selon les revendications 1 et 2, caractérisé en ce que la coulisse intérieure (2) est fabriquée par découpage de précision et en ce que la goupille (12) ressortant vers le haut est formée par estampage.

**Claims**

1. A gear-shift lock for the reverse gear of a multiple-speed transmission, in particular for motor vehicles, having a selector shaft which is rotatable by way of a gear-shift lever for preselecting gear-shift channels and axially displaceable for engaging gear speeds and which carries a gear-shift finger (1) which acts upon corresponding gear-shift forks in the transmission, a further gear-shift finger (4) being provided on the selector shaft and a spring-loaded, rotatable catching cam (13) being provided which cooperates with parts of the selector shaft and which prevents a shift back from a forward gear into the reverse gear situated opposite in the same gear-shift channel, and a sector-shaped base plate (5) is mounted so as to be rotatable about a pin (6) and comprises a lower sector portion in which is disposed a spring (8) which embraces the pin (6) with its coil and is provided with legs and the legs of which hold the base plate (5) in a neutral position, characterized in that the gear-shift finger (1) cooperates in a guiding manner with an internal gear-shift gate (2), the base plate (5) is mounted on the internal gear-shift gate (2) so as to be rotatable by way of the pin (6), the base plate (5) is held by the legs of the spring (8) by way of a pin (11) projecting into the sector portion (9) and by way of a pin (12) projecting from the gear-shift gate, and the base plate (5) is provided on its top with the integral catching cam (13) which has a catching bulge (14) and which cooperates with the further gear-shift finger (4) and thus necessitates a yielding action by pivoting the gear-shift fingers (1, 4) in the direction of the adjacent gear-shift channel.

2. A gear-shift lock according to claim 1, characterized in that the base plate (5) is formed as a sintered component.

3. A gear-shift lock according to claims 1 and 2, characterized in that the internal gear-shift gate (2) is produced by precision blanking and the projecting pin (12) is formed by stamping.

FIG.1

FIG.2

FIG.3